(19) Europäisches Patentamt
European Patent Office
Office européen des brevets

(11) **EP 4 033 286 A1**

(12) ## EUROPEAN PATENT APPLICATION
published in accordance with Art. 153(4) EPC

(43) Date of publication:
**27.07.2022 Bulletin 2022/30**

(21) Application number: **19958582.9**

(22) Date of filing: **30.12.2019**

(51) International Patent Classification (IPC):
**G02B 13/00** *(2006.01)*

(52) Cooperative Patent Classification (CPC):
**G02B 13/00**

(86) International application number:
**PCT/CN2019/130134**

(87) International publication number:
**WO 2021/134309 (08.07.2021 Gazette 2021/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **TIANJIN OFILM OPTO ELECTRONICS
CO., LTD**
**Tianjin, 300385 (CN)**

(72) Inventors:
• **LE, Yuming**
**Tianjin 300385 (CN)**
• **LAN, Binli**
**Tianjin 300385 (CN)**
• **ZHOU, Rui**
**Tianjin 300385 (CN)**

(74) Representative: **Inchingalo, Simona**
**Bugnion S.p.A.**
**Viale Lancetti, 17**
**20158 Milano (IT)**

(54) **OPTICAL LENS GROUP, CAMERA MODULE, AND TERMINAL**

(57)     An optical lens group, a camera module, and a terminal, relating to the technical field of optical imaging. The optical lens group comprises a first lens (110), a second lens (120), a third lens (130), a fourth lens (140), and a fifth lens (150) which are provided in sequence from the object surface to the image surface along the optical axis; the first lens (110) has a positive refractive power, the radius of curvature of the object side surface of the first lens (110) is positive, and the radius of curvature of the image side surface of the first lens (110) is negative; the second lens (120) has a negative refractive power; the fifth lens (150) has a negative refractive power, and the radius of curvature of the object side surface of the fifth lens (150) is negative. When the optical lens group is used in a DMS, information of a driver can be accurately captured in real time for system image analysis, so that when the driver is tired and distracted, the DMS can issue an alarm in time to provide protection for driving safety. When the optical lens group is used in security monitoring, detailed information can also be clearly recorded, and corresponding technical support and application assurance are provided in practical applications.

FIG.1

EP 4 033 286 A1

**Description**

**TECHNICAL FIELD**

The present application relates to the technical field of optical imaging, in particular to an optical lens group, a camera module and a terminal.

**BACKGROUND**

With the development of the vehicle industry, technologies such as advanced driving assistant system (ADAS) and driver monitoring system (DMS) have gradually matured. The DMS needs to monitor the driver's head, face and other expressions and motions in real time, and provide early warning for the driver's fatigue and distraction states. The states that require early warning include closing eyes, head dropping, yawning, looking left and right, smoking, making phone calls, etc. In order to enable the DMS to accurately monitor the driver's head, face and other expressions and motions in highly challenging lighting environments such as nighttime and backlight, a camera device with high pixel and high resolution is urgently needed.

**SUMMARY**

Embodiments of the present application provide an optical lens group, a camera module, and a terminal, which have high pixel and high resolution in highly challenging lighting environments such as nighttime and backlight. The technical solutions are as follows.

In a first aspect, an embodiment of the present application provide an optical lens group, including, successively in order from an object side to an image side along an optical axis: a first lens, a second lens, a third lens, a fourth lens, and a fifth lens.

The first lens has a positive refractive power, a curvature radius of an object side surface of the first lens is positive, and a curvature radius of an image side surface of the first lens is negative.

The second lens has a negative refractive power.

The fifth lens has a negative refractive power, a curvature radius of an object side surface of the fifth lens is negative.

Further, half of a diagonal length of an effective pixel area on the image side is ImgH, and a total track length of the optical lens group is TTL ; ImgH and TTL satisfy the following condition:

$0.1 < ImgH * 2/TTL < 0.8$ .

The above further solution has beneficial effects as follows. The half the diagonal length of the effective pixel area on the image side and the total track length are configured to satisfy: $0.1 < ImgH * 2/TTL < 0.8$, which can not only ensure the high pixel and the imaging quality of the system, but also control the total track length, such that a volume of a camera including the optical lens group can be minimized. When the half of the diagonal length of the effective pixel area on the image side and the total track length are above the range of the above condition, the resolution of the imaging system will be reduced, which is not beneficial to the miniaturization characteristic of the system.

Further, a focal length of the optical lens group is f , an optical back focal length of the optical lens group is BFL ; f and BFL satisfy the following condition:

$$0 < BFL/f < 3 .$$

The above further solution has beneficial effects as follows. The focal length and the optical back focal length of the optical lens group are configured to satisfy: $0 < BFL/f < 3$ , such that the miniaturization of the system can be ensured. When the ratio of the focal length to the optical back focus of the optical lens group is above the range of the above condition, the back focal length of the system will be too long, which is not beneficial to the miniaturization characteristic.

Further, a focal length of the first lens is $f_1$, a focal length of the optical lens group is f ; $f_1$ and f satisfy the following condition:

$$1 < f_1/f < 3 .$$

The above further solution has beneficial effects as follows. The focal length of the first lens and the focal length of the optical lens group are configured to satisfy: $1 < f_1/f < 3$, such that the first lens adjacent to the object side is a positive lens, which can provide a positive refractive power for the system, and can focus the incident beam, which is beneficial to effectively transmitting the image information acquired by the optical lens group to the image side.

Further, a curvature radius of an image side surface of the third lens is negative, a curvature radius of an object side surface of the fourth lens is positive. A distance between the image side surface of the third lens and the object side surface of the fourth lens on the optical axis is $d_{34}$ ; a distance from a projection point of a largest periphery of an optical effective area of the image side surface of the third lens on the optical axis, to a projection point of a largest periphery of an optical effective area of the object side surface of the fourth lens is $Ed_{34}$; $d_{34}$ and $Ed_{34}$ satisfy the following condition:

$$Ed_{34}/d_{34} < 20 .$$

The above further solution has beneficial effects as follows. The distance between the image side surface of the third lens and the object side surface of the fourth lens on the optical axis, and the distance from the projection point of the largest periphery of the optical effective area of the image side surface of the third lens on the optical axis, to the projection point of the largest periphery of the optical effective area of the object side surface of the fourth lens are configured to satisfy: $Ed_{34}/d_{34} < 20$, such that the degree of curvature of the curved surfaces of the image side surface of the third lens and the object side surface of the fourth lens can be controlled, that is, the control of the curvatures of the image side surface of the third lens and the object side surface of the fourth lens is realized, which is beneficial to the miniaturization of the system. Moreover, since the curvature radius of the image side surface of the third lens is negative, and the curvature radius of the object side surface of the fourth lens is positive, that is, the image side surface of the third lens and the object side surface of the fourth lens are both convex, through such configuration, on the premise of ensuring high pixels, the two convex surfaces can be prevented from being bent too much, and collisions during the assembly process can be avoided, and the assembly yield can be improved.

Further, half of a diagonal length of an effective pixel area on the image side is ImgH, and an angle of field of view in a diagonal direction of the optical lens group is FOV; ImgH and FOV satisfy the following condition:

$$Tan(FOV/2)/ImgH > 0.15 .$$

The above further solution has beneficial effects as follows. The half of a diagonal length of the effective pixel area on the image side and the angle of field of view in the diagonal direction of the optical lens group are configured to satisfy: $Tan(FOV/2)/ImgH > 0.15$ , such that it can ensure that the system can enlarge the capturing range of the camera device on the premise of having high pixels. When the half of the diagonal length of the effective pixel area on the image side and the angle of field of view in the diagonal direction of the optical lens group are above the range of the above condition, it is not beneficial to the wide-angle and high-pixel characteristics of the system.

Further, a thickness of the second lens at the optical axis is $CT_2$, $CT_2$ satisfies the following condition:

$$CT_2 > 0.3 .$$

The above further solution has beneficial effects as follows. The thickness of the second lens at the optical axis is configured to be greater than 0.3, such that the processability of the lens can be ensured.

Further, when a wavelength is 960 nm, a refractive index of the second lens is $n_{\lambda2}$, a refractive index of the third lens is $n_{\lambda3}$ ; $n_{\lambda2}$ and $n_{\lambda3}$ satisfy the following condition:

$$0 < |n_{\lambda3}-n_{\lambda2}| * 100 < 60 .$$

The above further solution has beneficial effects as follows. The absolute value of the difference between the refractive index of the second lens and the refractive index of the third lens when the wavelength is 960 nm is configured to satisfy: $0 < |n_{\lambda3}-n_{\lambda2}| * 100 < 60$, such that it is beneficial to reducing aberrations and improving the imaging quality of the imaging system in the short-wave infrared band.

Further, an Abbe number of the second lens with respect to d light is $vd_2$, an Abbe number of the fifth lens with respect to the d light is $vd_5$; $vd_2$ and $vd_5$ satisfy the following condition:

$$\left|vd_2 - vd_5\right| < 50 .$$

The above further solution has beneficial effects as follows. The absolute value of the difference between the Abbe number of the second lens with respect to the d light and the Abbe number of the fifth lens with respect to the d light is limited to be less than 50, such that it is beneficial to correcting off-axis chromatic aberration and improving the imaging quality when the optical lens group is applied in the visible light band.

Further, a focal length of the optical lens group is f , and an entrance pupil diameter of the optical lens group is EPD ; f and EPD satisfy the following condition:

$$f/\overline{EPD} \leq 2.4 .$$

The above further solution has beneficial effects as follows. The ratio of the focal length of the optical lens group to the entrance pupil diameter of the optical lens group is configured to satisfy: f/EPD ≤ 2.4, such that a larger entrance pupil can be provided, the aperture can be enlarged, which is beneficial to improving the imaging quality, while enlarging the use time and space of the carrier. When the ratio of the focal length to the entrance pupil diameter of the optical lens group exceeds the upper limit of 2.4, it is not beneficial to the imaging depth of the system, and the brightness of the field of view is insufficient, which will reduce the clarity of the imaging system.

Further, a distortion of the optical lens group is Dist; Dist satisfies the following condition:

$$\left|Dist\right| < 25\% .$$

The above further solution has beneficial effects as follows. The absolute value of the distortion of the optical lens group is configured to be less than 25%, such that the distortion of the entire optical system can be controlled, the resolution of the system can be improved, and the risk of misjudgment when capturing images at wider angles can be reduced.

Further, a reciprocal of a curvature radius of an object side surface of the third lens is cuy s5 , an optical effective diameter of the object side surface of the third lens is map s5 , a reciprocal of a curvature radius of an image side surface of the third lens is cuy s6, and an optical effective diameter of the image side surface of the third lens is map s6; cuy s5, map s5, cuy s6, and map s6 satisfy the following condition:

$$\left|(cuy\ s5)*(map\ s5)-(cuy\ s6)*(map\ s6)\right|/2 > 0.05 .$$

The above further solution has beneficial effects as follows. The reciprocal of the curvature radius of the object side surface of the third lens, the optical effective diameter of the object side surface of the third lens, the reciprocal of the curvature radius of the image side surface of the third lens, and the optical effective diameter of the image side surface of the third lens are configured to satisfy: |(cuy s5)*(map s5)-(cuy s6)*(map s6)|/2 > 0.05 , and thus the optical effective diameter and the curvature of the object side surface of the third lens and the optical effective diameter and the curvature of the image side surface of the third lens are reasonably configured, such that the processing difficulty of the meniscus lens can be controlled, and the process capability of the meniscus lens can be ensured.

Further, a curvature radius of an image side surface of the fifth lens is Rs10; Rs10 satisfies the following condition:

$$R\ s10 < -20 .$$

The above further solution has beneficial effects as follows. The curvature radius of the image side surface of the fifth lens is configured to be less than -20, such that it is beneficial to edge resolution, facilitates assembly, reduces eccentricity, and enlarges the back focal length.

In a second aspect, an embodiment of the present application provide a camera module, including: the optical lens group according to any one of above; and an image sensor.

The optical lens group is configured to receive a light signal of a subject and project the light signal to the image sensor. The image sensor is configured to convert the light signal into an image signal.

In a third aspect, the embodiments of the present application provide a terminal, including the camera module as described above.

The embodiments of the present application has beneficial effects as follows. The first lens of the optical lens group is arranged to have the positive refractive power, the second lens and the fifth lens are arranged to have the negative refractive power, the curvature radius of the object side surface of the first lens is arranged to be positive, the curvature radius of the image side surface of the first lens is arranged to be negative, and the curvature radius of the object side surface of the fifth lens is arranged to be negative, such that the camera formed by the optical lens group has the advantages of wide viewing angle, miniaturization, high imaging quality, high resolution and the like. The optical lens group according to the embodiments of the present application is applicable in high-pixel cameras used in vehicles, automatic driving and monitoring devices, etc., and can improve the imaging quality of the optical system, such that the imaging information captured by the camera system can be clearly presented at the position of the imaging element, and the details can be captured more clearly and transmitted to the system for automatic recognition. When used in the DMS, the optical lens group according to the embodiments of the present application can accurately and real-time capture the driver's information for system image analysis, such that when the driver is fatigued and distracted, the DMS can issue an alarm in time, so as to ensure the safe driving. When used in monitoring and security, the optical lens group can also clearly record detailed information, and provide corresponding technical support and application guarantee in practical applications.

## BRIEF DESCRIPTION OF THE DRAWINGS

In order to more clearly illustrate the embodiments of the present application or the technical solutions in the prior art, the accompanying drawings that are used in the description of the embodiments or the prior art are briefly introduced below. Apparently, the drawings in the following description are only some embodiments of the present application. For those of ordinary skill in the art, other drawings can also be obtained based on these drawings without any creative effort.

FIG. 1 is a schematic view of an optical lens group according to a first embodiment of the present application.
FIG. 2 is an aberration graph of the optical lens group according to the first embodiment of the present application.
FIG. 3 is a field curve graph of the optical lens group according to the first embodiment of the present application.
FIG. 4 is a distortion graph of the optical lens group according to the first embodiment of the present application.
FIG. 5 is a schematic view of an optical lens group according to a second embodiment of the present application.
FIG. 6 is an aberration graph of the optical lens group according to the second embodiment of the present application.
FIG. 7 is a field curve graph of the optical lens group according to the second embodiment of the present application.
FIG. 8 is a distortion graph of the optical lens group according to the second embodiment of the present application.
FIG. 9 is a schematic view of an optical lens group according to a third embodiment of the present application.
FIG. 10 is an aberration graph of the optical lens group according to the third embodiment of the present application.
FIG. 11 is a field curve graph of the optical lens group according to the third embodiment of the present application.
FIG. 12 is a distortion graph of the optical lens group according to the third embodiment of the present application.

## DETAILED DESCRIPTION OF THE EMBODIMENTS

In order to make the objectives, technical solutions and advantages of the present application clearer, the embodiments of the present application will be further described in detail below with reference to the accompanying drawings.

When the following description refers to the drawings, the same numerals in different drawings refer to the same or similar elements, unless otherwise indicated. The implementations described in the illustrative embodiments below are not intended to indicate all implementations consistent with this application. Rather, they are merely examples of devices and methods consistent with some aspects of the present application, as recited in the appended claims.

Hereinafter, aberrations involved in the embodiments of the present application are firstly explained. The aberration refers to a deviation of a result obtained by non-paraxial ray tracing from ideal conditions of Gaussian optics (first-order approximation theory or paraxial rays) in the optical system, where the result obtained by non-paraxial ray tracing is inconsistent with a result obtained by paraxial ray tracing. The Aberration is divided into two categories of chromatic aberration (or chromatism) and monochromatic aberration. The chromatic aberration is an aberration generated due to different refractive indexes when light of different wavelengths transmits through a lens, because the refractive index of the material used to make the lens is a function of the wavelength. The chromatic aberration can be divided into two types of positional chromatic aberration and magnification chromatic aberration. The chromatic aberration is a kind of dispersion phenomenon. The so-called dispersion phenomenon refers to a phenomenon that the speed of light or the refractive index of the light in the medium changes with the wavelength of the light wave. The dispersion in which the refractive index of the light decreases with the increase of the wavelength can be called a normal dispersion, and the dispersion in which the refractive index increases with the increase of the wavelength can be called a negative dispersion (or negative anomalous dispersion). The monochromatic aberration refers to the aberration that occurs even in highly monochromatic light. According to the effect, the monochromatic aberration is divided into two categories of "blurring the imaging" and "distorting the imaging"; where the former category includes spherical aberration, astigmatism and the like, and the latter category includes field curvature, distortion and the like. The aberration further includes a coma, which refers to a comet-shaped spot with a bright tail formed by emitting a monochromatic conical beam to the optical system from an off-axis object point located outside the main axis, and then refracting it by the optical system, which cannot form a clear point at the ideal plane.

In a first aspect, an embodiment of the present application provides an optical lens group for imaging, including a first lens 110, a second lens 120, a third lens 130, a fourth lens 140, and a fifth lens 150. The first lens 110, the second lens 120, the third lens 130, the fourth lens 140, and the fifth lens 150 are arranged successively in order from an object side to an image side along an optical axis.

The first lens 110 has a positive refractive power. A curvature radius of an object side surface of the first lens 110 is positive, and a curvature radius of an image side surface of the first lens 110 is negative. A focal length of the first lens 110 is $f_1$, a focal length of the optical lens group is $f$, and $f_1$ and $f$ satisfy the following condition: $1 < f_1/f < 3$. The first lens 110 is adjacent to the object side. The first lens 110 adjacent to the object side is arranged as a positive lens, and the focal length of the first lens 110 satisfies the above condition, which can provide a positive refractive power for the system, and can focus the incident beam, which is beneficial to effectively transmit the image information acquired by the optical lens group to the image side.

The second lens 120 has a negative refractive power. A curvature radius of an object side surface of the second lens 120 is negative, and a curvature radius of an image side surface of the second lens 120 is positive. A thickness of the second lens 120 at the optical axis is $CT_2$. $CT_2$ satisfies the following condition: $CT_2 > 0.3$. The second lens 120 at the optical axis is reasonably configured as above, such that the processability of the lens can be ensured.

The third lens 130 has a positive refractive power. A curvature radius of an object side surface of the third lens 130 is negative, and a curvature radius of an image side surface of the third lens 130 is negative. A reciprocal of the curvature radius of the object side surface of the third lens 130 is cuy s5, an optical effective diameter of the object side surface of the third lens 130 is map s5, a reciprocal of the curvature radius of the image side surface of the third lens 130 is cuy s6, and an optical effective diameter of the image side surface of the third lens 130 is map s6. cuy s5, map s5, cuy s6, and map s6 satisfy the following condition: |(cuy s5)∗(map s5)-(cuy s6)∗(map s6)|/2 > 0.05. The reciprocal of the curvature radius of the object side surface of the third lens 130, the optical effective diameter of the object side surface of the third lens 130, the reciprocal of the curvature radius of the image side surface of the third lens 130, and the optical effective diameter of the image side surface of the third lens 130 are reasonably configured as above, such that the processing difficulty of the meniscus lens can be controlled, and the process capability of the meniscus lens can be ensured.

The fourth lens 140 has a positive refractive power. A curvature radius of an object side surface of the fourth lens 140 is positive, and a curvature radius of an image side surface of the fourth lens 140 is negative. A distance between the image side surface of the third lens 130 and the object side surface of the fourth lens 140 on the optical axis is $d_{34}$; a distance from a projection point of the largest periphery of an optical effective area of the image side surface of the third lens 130 on the optical axis, to a projection point of the largest periphery of an optical effective area of the object side surface of the fourth lens 140 is $Ed_{34}$; $d_{34}$ and $Ed_{34}$ satisfy the following condition: $Ed_{34}/d_{34} < 20$. The distance between the image side surface of the third lens 130 and the object side surface of the fourth lens 140 on the optical axis, and the distance from a projection point of the largest periphery of the optical effective area of the image side surface of the third lens 130 on the optical axis to a projection point of the largest periphery of the optical effective area of the object side surface of the fourth lens 140 are reasonably configured as above, such that the degree of curvature of the curved surfaces of the image side surface of the third lens 130 and the object side surface of the fourth lens 140 can be controlled, that is, the control of the curvatures of the image side surface of the third lens 130 and the object side surface of the fourth lens 140 is realized, which is beneficial to the miniaturization of the system. Moreover, since the curvature radius of the image side surface of the third lens 130 is negative, and the curvature radius of the object side surface of the fourth lens 140 is positive, that is, the image side surface of the third lens 130 and the object side surface of the fourth lens 140 are both convex, through such configuration, on the premise of ensuring high pixels, the two convex surfaces can be prevented from being bent too much, and collisions during the assembly process can be avoided, and the assembly yield can be improved.

The fifth lens 150 has a negative refractive power. A curvature radius of an object side surface of the fifth lens 150 is negative, a curvature radius of an image side surface of the fifth lens 150 is negative, or the image side surface is flat. The curvature radius of the image side surface of the fifth lens 150 is Rs10. Rs10 satisfies the following condition: Rs10 <-20. By limiting the curvature radius of the image side surface of the fifth lens 150 to be less than -20 as above, it is beneficial to edge resolution, facilitates assembly, reduces eccentricity, and enlarges the back focal length. When the image side surface of the fifth lens 150 is flat, the effect is more excellent, which is more beneficial to edge resolution and assembly, reduces eccentricity, and enlarges the back focal length.

When the wavelength is 960 nm, a refractive index of the second lens 120 is $n_{\lambda 2}$, a refractive index of the third lens 130 is $n_{\lambda 3}$; $n_{\lambda 2}$ and $n_{\lambda 3}$ satisfy the following condition: $0 < |n_{\lambda 3}-n_{\lambda 2}| * 100 < 60$. The absolute value of the difference between the refractive index of the second lens 120 and the refractive index of the third lens 130 when the wavelength is 960 nm is reasonably configured as above, such that it is beneficial to reducing aberrations and improving the imaging quality of the imaging system in the short-wave infrared band.

An Abbe number of the second lens 120 with respect to the d light is $vd_2$, an Abbe number of the fifth lens 150 with respect to the d light is $vd_5$; $vd_2$ and $vd_5$ satisfy the following condition: $|vd_2-vd_5| < 50$. The absolute value of the difference between the Abbe number of the second lens 120 with respect to the d light and the Abbe number of the fifth lens 150 with respect to the d light is configured to be less than 50 as above, such that it is beneficial to correcting off-axis chromatic aberration and improving the imaging quality when the optical lens group is applied in the visible light band.

The refractive powers of the above lenses may be the refractive powers of the lenses at the optical axis. The object side surfaces of the above lenses are the surfaces of the lenses on a side facing the object side. The image side surfaces of the lenses are the surfaces of the lenses on a side facing the image side. The curvature radius of the above surface being positive may be that the curvature radius of the surface at the optical axis is positive, or the curvature radius of the entire surface is positive. The curvature radius of the above surface being negative may be that the curvature radius of the surface at the optical axis is negative, or the curvature radius of the entire surface is negative. In the above, the positive curvature radius means that the surface is convex toward the object side, and the negative curvature radius means that the surface is convex toward the image side.

In a plurality of object side surfaces and a plurality of image side surfaces of the first lens 110, the second lens 120, the third lens 130, the fourth lens 140 and the fifth lens 150, at least one surface may be aspherical, or all surfaces may be spherical. In the above, the surface being aspherical may be that the entire surface of the lens is aspherical. The surface being aspherical may also be that a portion of the surface is aspherical. For example, a portion adjacent to the optical axis may be aspherical.

The first lens 110, the second lens 120, the third lens 130, the fourth lens 140 and the fifth lens 150 can all be made of plastic materials because the plastic has a low cost, is convenient for processing, and easy to make the aspheric surface. Certainly, in order to improve the imaging quality, part or all of the first lens 110, the second lens 120, the third lens 130, the fourth lens 140 and the fifth lens 150 may also be made of glass material. The glass material has strong adaptability to the environment and adapt to a wide temperature range, which can ensure the imaging quality.

In order to reduce stray light and improve the imaging effect, the optical lens group can further include a stop. The stop may be an aperture stop and/or a field stop. The stop can be located between the object side and the image side. For example, the stop may be located between the object side surface of the first lens 110 and the object side, or between the image side surface of the first lens 110 and the object side surface of the second lens 120, or between the image side surface of the second lens 120 and the object side surface of the third lens 130, or between the image side surface of the third lens 130 and the object side surface of the fourth lens 140, or between the image side surface of the fourth lens 140 and the object side surface of the fifth lens 150, or between the image side surface of the fifth lens 150 and the image side. In order to reduce the processing cost, the stop may be arranged on any one of the object side surfaces and the image side surfaces of the first lens 110, the second lens 120, the third lens 130, the fourth lens 140, and the fifth lens 150.

In order to control a total track length, half of a diagonal length ImgH of an effective pixel area on the image side and the total track length TTL of the optical lens group can satisfy the following condition: $0.1 < ImgH * 2/TTL < 0.8$. The half the diagonal length of the effective pixel area on the image side and the total track length are reasonably configured as above, which can not only ensure the high pixel and the imaging quality of the system, but also control the total track length, such that a volume of a camera including the optical lens group can be minimized. When the half of the diagonal length of the effective pixel area on the image side and the total track length are above the range of the above condition, the resolution of the imaging system will be reduced, which is not beneficial to the miniaturization characteristic of the system. The total track length is the distance from the object side surface of the first lens 110 to the image plane on the optical axis.

In order to ensure the miniaturization of the system, a focal length f of the optical lens group and an optical back focal length BFL of the optical lens group can satisfy the following condition: $0 < BFL/f < 3$. When the ratio of the focal length to the optical back focus of the optical lens group is above the range of the above condition, the back focal length of the system will be too long, which is not beneficial to the miniaturization characteristic. The optical back focus is the minimum distance from the image side surface of the last lens to the image side in a direction parallel to the optical axis, that is, the minimum distance from the image side surface of the fifth lens 150 to the image side in the direction parallel to the optical axis.

The half of the diagonal length of the effective pixel area on the image side is ImgH, and an angle of field of view in the diagonal direction of the optical lens group is FOV; ImgH and FOV satisfy the following condition: Tan(FOV/2)/ImgH > 0.15 . The half of the diagonal length of the effective pixel area on the image side and the angle of field of view in the diagonal direction of the optical lens group are reasonably configured as above, such that it can ensure that the system can enlarge the capturing range of the camera device on the premise of having high pixels. When the half of the diagonal length of the effective pixel area on the image side and the angle of field of view in the diagonal direction of the optical lens group are above the range of the above condition, it is not beneficial to the wide-angle and high-pixel characteristics of the system.

In order to provide a larger entrance pupil, the focal length f of the optical lens group and an entrance pupil diameter EPD of the optical lens group can satisfy the following condition: f/EPD ≤ 2.4. The ratio of the focal length of the optical lens group to the entrance pupil diameter of the optical lens group is reasonably configured as above, such that a larger entrance pupil can be provided, the aperture can be enlarged, which is beneficial to improve the imaging quality, while enlarging the use time and space of the carrier. When the ratio of the focal length of the optical lens group to the entrance pupil diameter of the optical lens group exceeds the upper limit of 2.4, it is not beneficial to the imaging depth of the system, and the brightness of the field of view is insufficient, which will reduce the resolution of the imaging system.

In order to improve the resolution of the system, the distortion Dist of the optical lens group can satisfy the following condition: |Dist| <25%, so as to control the distortion of the entire optical system, improve the resolution of the system, and reduce the risk of misjudgment when capturing images at wider angles.

In order to protect each lens, the optical lens group may further include a protective glass located between the image side surface of the fifth lens 150 and the image side.

In order to filter the non-working wavelength band, the optical lens group may further include a filtering element. The filtering element may be a filter located between the object side and the image side. The filter may be located between the object side surface of the first lens 110 and the object side, or between the image side surface of the first lens 110 and the object side surface of the second lens 120, or between the image side surface of the second lens 120 and the object side surface of the third lens 130, or between the image side surface of the third lens 130 and the object side surface of the fourth lens 140, or between the image side surface of the fourth lens 140 and the object side surface of the fifth lens 150, or between the image side surface of the fifth lens 150 and the image side. In order to reduce the manufacturing cost, the filtering element can also be a filtering film coated on any one of the object side surfaces and the image side surfaces of the first lens 110, the second lens 120, the third lens 130, the fourth lens 140, and the fifth lens 150.

The camera formed by the optical lens group of the embodiments of the present application has the advantages of wide viewing angle, low sensitivity, miniaturization, high imaging quality, etc. When used in an advanced driver assistance system (ADAS), the camera can accurately and real-time capture road information (detecting objects, detecting light sources, detecting road signs, etc.) to provide it to the system for image analysis, to ensure the safety of automatic driving. When used in driving records, the camera can provide a clear vision for the driver's driving and ensure the driver's safe driving. When used in monitoring security, the camera can clearly record the detailed information.

The optical lens group for imaging will be described in detail below with reference to specific parameters.

First Embodiment

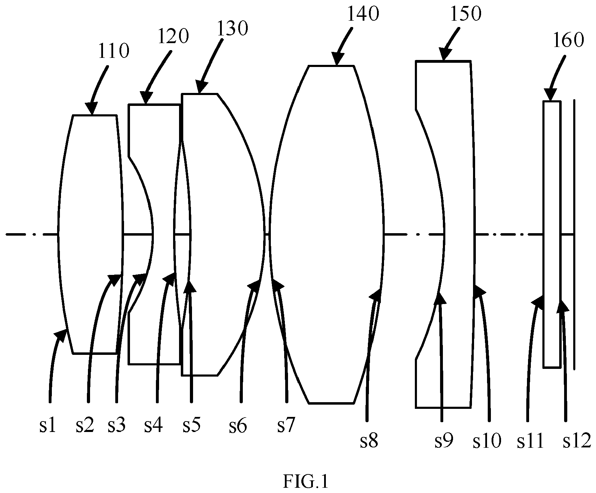

Referring to FIG. 1, which is a schematic view of an optical lens group for imaging according to an embodiment of the present application. The optical lens group includes, successively in order from an object side to an image side along an optical axis: a stop (attached to an object side surface of the first lens 110, not shown in the figure), a first lens 110, a second lens 120, a third lens 130, a stop 180, a fourth lens 140, a fifth lens 150, and a protective glass. The first lens 110 has a positive refractive power. A curvature radius of the object side surface of the first lens 110 is positive, and a curvature radius of an image side surface of the first lens 110 is negative. The second lens 120 has a negative refractive power. A curvature radius of an object side surface of the second lens 120 is negative, and a curvature radius of an image side surface of the second lens 120 is positive. The third lens 130 has a positive refractive power. A curvature radius of an object side surface of the third lens 130 is negative, and a curvature radius of an image side surface of the third lens 130 is negative. The fourth lens 140 has a positive refractive power. A curvature radius of an object side surface of the fourth lens 140 is positive, and a curvature radius of an image side surface of the fourth lens 140 is negative. The fifth lens 150 has a negative refractive power. A curvature radius of an object side surface of the fifth lens 150 is negative, and a curvature radius of an image side surface of the fifth lens 150 is negative.

In the embodiment of the present application, light with a wavelength of 960 nm is used as a reference, and the relevant parameters of the optical lens group are shown in Table 1. In Table 1, f is a focal length of the optical lens group, FNO indicates a f-number, and 1/2 FOV indicates half of an angle of field of view in the diagonal direction of the optical lens group. The unit of the focal length, the curvature radius and a thickness are all in millimeters.

Table 1

| f= 5.52, FNO= 2.08, 1/2 FOV=32.5 | | | | | | | | |
|---|---|---|---|---|---|---|---|---|
| Surface Number | Surface Name | Surface Shape | Curvature Radius | Thickness | Material | Refractive index | Abbe Number | Focal Length |
| Object side | | Spherical | Infinite | 800 | | | | |
| s1 | First Lens | Spherical | 11.2100 | 1.50 | Glass | 1.804 | 46.5 | 10.114 |
| s2 | | Spherical | -25.8 | 0.69 | | | | |
| s3 | Second Lens | Spherical | -3.1997 | 0.50 | Glass | 1.487 | 70.4 | -5.521 |
| s4 | | Spherical | 16.1700 | 0.38 | | | | |
| s5 | Third Lens | Spherical | -12.4490 | 1.72 | Glass | 2.001 | 29.1 | 8.682 |
| s6 | | Spherical | -5.3648 | 0.12 | | | | |
| s7 | Fourth Lens | Spherical | 8.8413 | 2.65 | Glass | 2.001 | 29.1 | 5.471 |
| s8 | | Spherical | -11.3100 | 1.41 | | | | |
| s9 | Fifth Lens | Spherical | -6.6326 | 0.70 | Glass | 1.847 | 23.8 | -8.858 |
| s10 | | Spherical | -85.3950 | 1.60 | | | | |
| s11 | Protective Glass | Spherical | Infinite | 0.40 | Glass | 1.523 | 54.5 | |
| s12 | | Spherical | Infinite | 0.32 | | | | |

As can be seen from Table 1 above, the focal length $f_1$ of the first lens 110 and the focal length f of the optical lens group in the embodiment of the present application satisfy a condition: $f_1/f$ = 1.83.

The thickness $CT_2$ of the second lens 120 at the optical axis satisfies:

$$CT_2 = 0.50.$$

A reciprocal cuy s5 of the curvature radius of the object side surface of the third lens 130, an optical effective diameter map s5 of the object side surface of the third lens 130, an reciprocal cuy s6 of the curvature radius of the image side surface of the third lens 130, and an optical effective diameter of the image side surface of the third lens 130 satisfy: |(cuy s5)∗(map s5)-(cuy s6)∗(map s6)|/2 = 0.16 .

The curvature radius Rs10 of the image side surface of the fifth lens 150 satisfies: Rs10 = -85.40.

When the wavelength is 960 nm, the refractive index $n_{\lambda 2}$ of the second lens 120 and the refractive index $n_{\lambda 3}$ of the third lens 130 satisfy a condition:

$$\left| n_{\lambda 3} - n_{\lambda 2} \right| * 100 = 49.00.$$

The Abbe number $vd_2$ of the second lens 120 with respect to the d light and the Abbe number $vd_5$ of the fifth lens 150 with respect to the d light satisfy a condition:

$$\left| vd_2 - vd_5 \right| = 16.90.$$

A distance $d_{34}$ between the third lens 130 and the fourth lens 140 on the optical axis and a distance $Ed_{34}$

between a periphery of the maximum effective diameter of the third lens 130 and a periphery of the maximum effective diameter of the fourth lens 140 satisfy a condition: $Ed_{34}/d_{34}$ = 12.25.

The half Im gH of the diagonal length of the effective pixel area on the image side and the total track length TTL of the optical lens group satisfy a condition:

$$\mathrm{ImgH} * 2 / \mathrm{TTL} \ = \ 0.52 \ .$$

The focal length f of the optical lens group and the optical back focal length BFL of the optical lens group satisfy a condition: BFL/f = 0.42.

The half Im gH of the diagonal length of the effective pixel area on the image plane and the angle of field of view FOV in the diagonal direction of the optical lens group satisfy a condition: Tan (FOV/2)/ImgH = 0.21.

The focal length f of the optical lens group and the entrance pupil diameter EPD of the optical lens group satisfy a condition: f/EPD = 2.1.

The distortion Dist of the optical lens group satisfies: |Dist| = 12.0%.

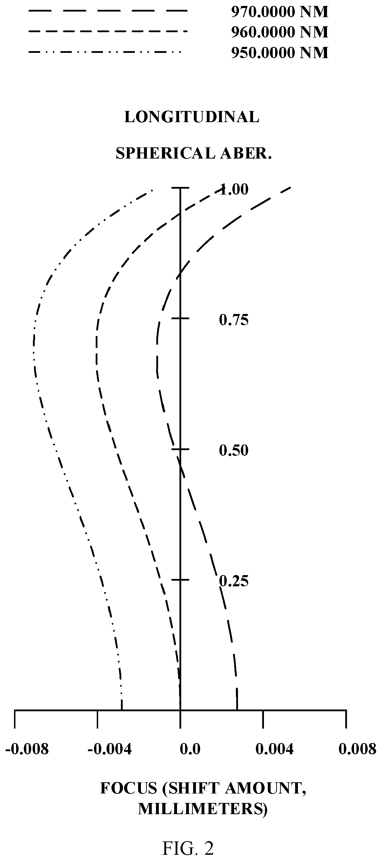

FIG. 2 is a graph showing the spherical aberration of the light at wavelengths of 950.0000 nm, 960.0000 nm and 970.0000 nm according to the embodiment of the present application. It can be seen from FIG. 2 that the spherical aberrations corresponding to the wavelengths of 950.0000 nm, 960.0000 nm and 970.0000 nm are all within 0.008 mm, indicating that the imaging quality according to the embodiment of the present application is excellent.

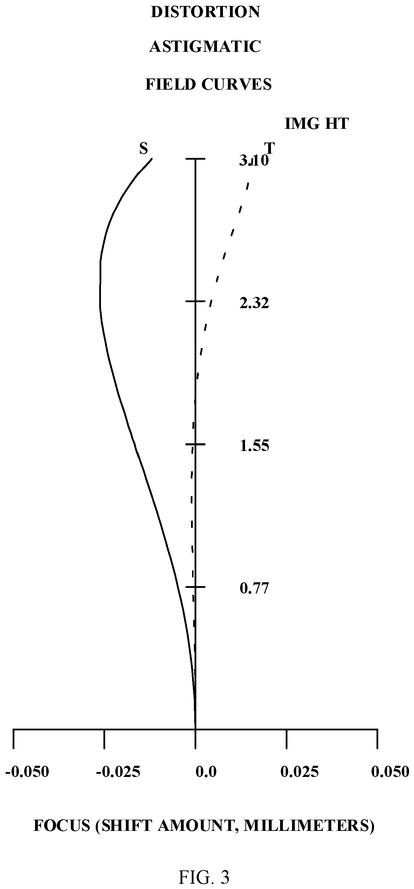

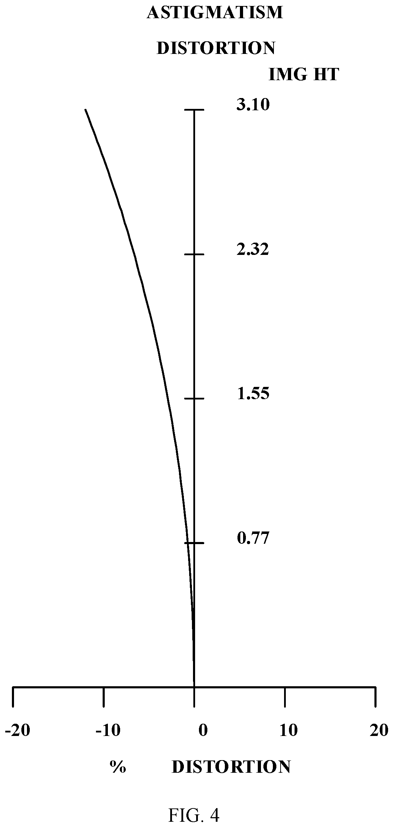

FIG. 3 is a field curve graph according to the embodiment of the present application, and it can be seen from FIG. 3 that the field curvature is within 0.050 mm, and better compensation is obtained. FIG. 4 is a distortion graph according to the embodiment of the present application, and it can be seen from FIG. 4 that the distortion is also well corrected.

Second Embodiment

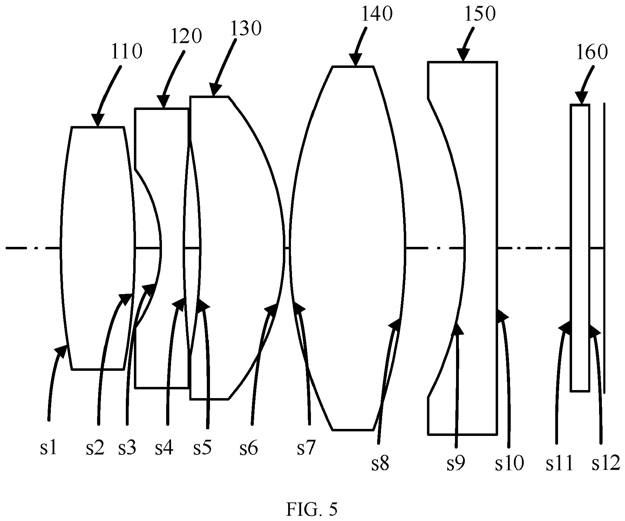

Referring to FIG. 5, which is a schematic view of an optical lens group for imaging according to an embodiment of the present application. The optical lens group includes, successively in order from an object side to an image side along an optical axis: a stop (attached to an object side surface of the first lens 110, not shown in the figure), a first lens 110, a second lens 120, a third lens 130, a stop 180, a fourth lens 140, a fifth lens 150, and a protective glass. The first lens 110 has a positive refractive power. A curvature radius of the object side surface of the first lens 110 is positive, and a curvature radius of an image side surface of the first lens 110 is negative. The second lens 120 has a negative refractive power. A curvature radius of an object side surface of the second lens 120 is negative, and a curvature radius of an image side surface of the second lens 120 is positive. The third lens 130 has a positive refractive power. A curvature radius of an object side surface of the third lens 130 is negative, and a curvature radius of an image side surface of the third lens 130 is negative. The fourth lens 140 has a positive refractive power. A curvature radius of an object side surface of the fourth lens 140 is positive, and a curvature radius of an image side surface of the fourth lens 140 is negative. The fifth lens 150 has a negative refractive power. A curvature radius of an object side surface of the fifth lens 150 is negative, and an image side surface of the fifth lens 150 is flat.

In the embodiment of the present application, light with a wavelength of 960 nm is used as a reference, and the relevant parameters of the optical lens group are shown in Table 2. In Table 2, f is a focal length of the optical lens group, FNO indicates a f-number, and 1/2 FOV indicates half of an angle of field of view in the diagonal direction of the optical lens group. The unit of the focal length, the curvature radius and a thickness are all in millimeters.

Table 2

| f= 5.13, FNO= 2.08, 1/2 FOV=35.1 | | | | | | | | |
|---|---|---|---|---|---|---|---|---|
| Surface Number | Surface Name | Surface Shape | Curvature Radius | Thickness | Material | Refractive index | Abbe Number | Focal Length |
| Object side | | Spherical | Infinite | 700 | | | | |
| s1 | First Lens | Spherical | 14.2180 | 1.60 | Glass | 1.804 | 46.5 | 9.264 |
| s2 | | Spherical | -14.2180 | 0.57 | | | | |
| s3 | Second Lens | Spherical | -2.8729 | 0.50 | Glass | 1.517 | 64.2 | -4.980 |
| s4 | | Spherical | 22.4770 | 0.36 | | | | |

(continued)

| Surface Number | Surface Name | Surface Shape | Curvature Radius | Thickness | Material | Refractive index | Abbe Number | Focal Length |
|---|---|---|---|---|---|---|---|---|
| | | | f= 5.13, FNO= 2.08, 1/2 FOV=35.1 | | | | | |
| s5 | Third Lens | Spherical | -12.4290 | 1.82 | Glass | 2.001 | 29.1 | 7.544 |
| s6 | | Spherical | -4.9370 | 0.12 | | | | |
| s7 | Fourth Lens | Spherical | 8.7251 | 2.50 | Glass | 2.001 | 29.1 | 5.418 |
| s8 | | Spherical | -11.3400 | 1.29 | | | | |
| s9 | Fifth Lens | Spherical | -6.8534 | 0.70 | Glass | 1.847 | 23.8 | -8.408 |
| s10 | | Spherical | Infinite | 1.60 | | | | |
| s11 | Protective Glass | Spherical | Infinite | 0.40 | Glass | 1.523 | 54.5 | |
| s12 | | Spherical | Infinite | 0.33 | | | | |

As can be seen from Table 2 above, the focal length $f_1$ of the first lens 110 and the focal length f of the optical lens group in the embodiment of the present application satisfy a condition: $f_1/f$ =1.81.

The thickness $CT_2$ of the second lens 120 at the optical axis satisfies:

$$CT_2 = 0.50.$$

A reciprocal cuy s5 of the curvature radius of the object side surface of the third lens 130, an optical effective diameter map s5 of the object side surface of the third lens 130, an reciprocal cuy s6 of the curvature radius of the image side surface of the third lens 130, and an optical effective diameter of the image side surface of the third lens 130 satisfy: |(cuy s5)∗(map s5)-(cuy s6)∗(map s6)|/2 = 0.18 .

The curvature radius R s10 of the image side surface of the fifth lens 150 satisfies: R s10 = infinite.

When the wavelength is 960 nm, the refractive index $n_{\lambda 2}$ of the second lens 120 and the refractive index $n_{\lambda 3}$ of the third lens 130 satisfy a condition:

$$\left| n_{\lambda 3} - n_{\lambda 2} \right| \ast 100 = 46.00.$$

The Abbe number $vd_2$ of the second lens 120 with respect to the d light and the Abbe number $vd_5$ of the fifth lens 150 with respect to the d light satisfy a condition:

$$\left| vd_2 - vd_5 \right| = 40.40.$$

A distance $d_{34}$ between the third lens 130 and the fourth lens 140 on the optical axis and a distance $Ed_{34}$ between a periphery of the maximum effective diameter of the third lens 130 and a periphery of the maximum effective diameter of the fourth lens 140 satisfy a condition: $Ed_{34}/d_{34}$ =13.33.

The half ImgH of the diagonal length of the effective pixel area on the image side and the total track length TTL of the optical lens group satisfy a condition:

$$\overline{ImgH} \ast 2/TTL = 0.53.$$

The focal length f of the optical lens group and the optical back focal length BFL of the optical lens group satisfy a condition: BFL/f = 0.45.

The half ImgH of the diagonal length of the effective pixel area on the image side and the angle of field of view FOV in the diagonal direction of the optical lens group satisfy a condition: Tan (FOV/2)/ImgH = 0.23.

The focal length f of the optical lens group and the entrance pupil diameter EPD of the optical lens group satisfy a condition: f/EPD = 2.1.

The distortion Dist of the optical lens group satisfies: |Dist| = 14.5%.

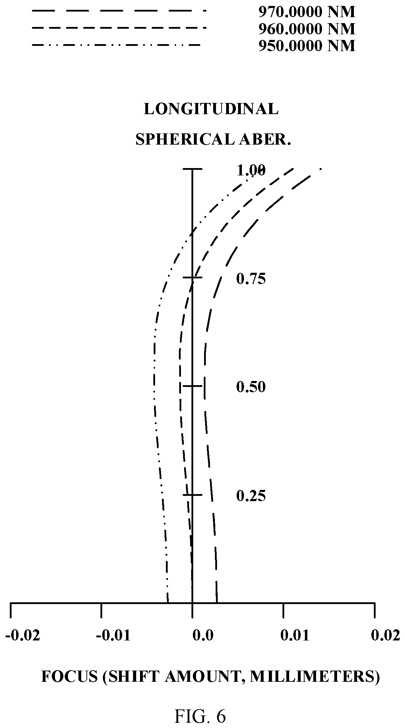

FIG. 6 is a graph showing the spherical aberration of the light at wavelengths of 950.0000 nm, 960.0000 nm and 970.0000 nm according to the embodiment of the present application. It can be seen from FIG. 6 that the spherical aberrations corresponding to the wavelengths of 950.0000 nm, 960.0000 nm and 970.0000 nm are all within 0.02 mm, indicating that the imaging quality according to the embodiment of the present application is excellent.

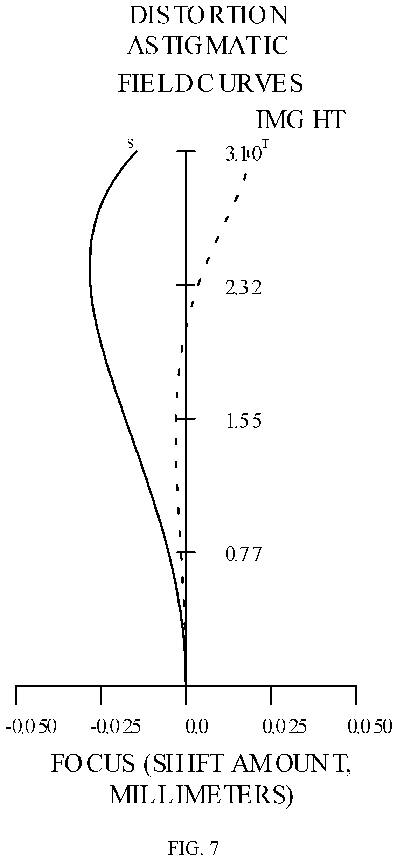

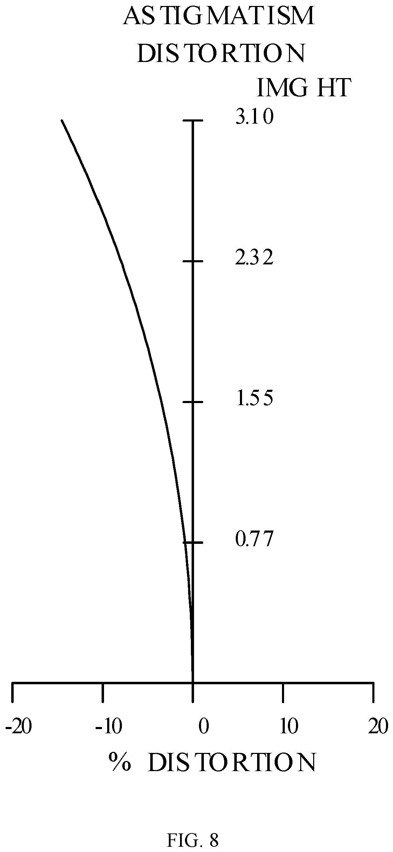

FIG. 7 is a field curve graph according to the embodiment of the present application, and it can be seen from FIG. 7 that the field curvature is within 0.050 mm, and better compensation is obtained. FIG. 8 is a distortion graph according to the embodiment of the present application, and it can be seen from FIG. 8 that the distortion is also well corrected.

Third Embodiment

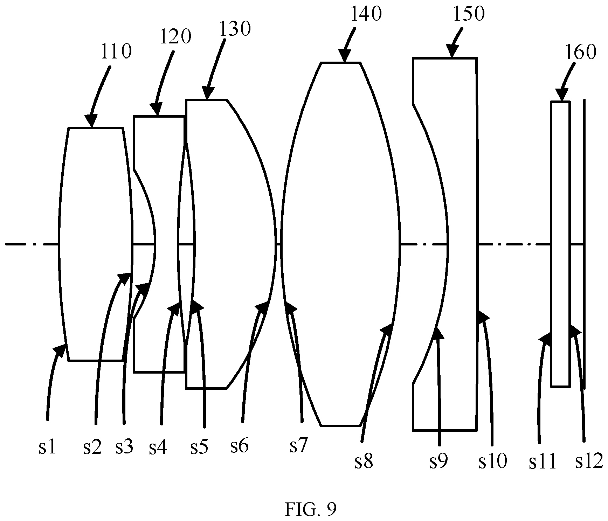

Referring to FIG. 9, which is a schematic view of an optical lens group for imaging according to an embodiment of the present application. The optical lens group includes, successively in order from an object side to an image side along an optical axis: a stop (attached to an object side surface of the first lens 110, not shown in the figure), a first lens 110, a second lens 120, a third lens 130, a stop 180, a fourth lens 140, a fifth lens 150, and a protective glass. The first lens 110 has a positive refractive power. A curvature radius of the object side surface of the first lens 110 is positive, and a curvature radius of an image side surface of the first lens 110 is negative. The second lens 120 has a negative refractive power. A curvature radius of an object side surface of the second lens 120 is negative, and a curvature radius of an image side surface of the second lens 120 is positive. The third lens 130 has a positive refractive power. A curvature radius of an object side surface of the third lens 130 is negative, and a curvature radius of an image side surface of the third lens 130 is negative. The fourth lens 140 has a positive refractive power. A curvature radius of an object side surface of the fourth lens 140 is positive, and a curvature radius of an image side surface of the fourth lens 140 is negative. The fifth lens 150 has a negative refractive power. A curvature radius of an object side surface of the fifth lens 150 is negative, and an image side surface of the fifth lens 150 is negative.

In the embodiment of the present application, light with a wavelength of 960 nm is used as a reference, and the relevant parameters of the optical lens group are shown in Table 3. In Table 3, f is a focal length of the optical lens group, FNO indicates a f-number, and 1/2 FOV indicates half of an angle of field of view in the diagonal direction of the optical lens group. The unit of the focal length, the curvature radius and a thickness are all in millimeters.

Table 3

| f= 5.09, FNO= 2.39, 1/2 FOV=34.9 | | | | | | | | |
|---|---|---|---|---|---|---|---|---|
| Surface Number | Surface Name | Surface Shape | Curvature Radius | Thickness | Material | Refractive index | Abbe Number | Focal Length |
| Object side | | Spherical | Infinite | 700 | | | | |
| s1 | First Lens | Spherical | 14.7950 | 1.60 | Glass | 2.001 | 29.1 | 7.837 |
| s2 | | Spherical | -14.7950 | 0.50 | | | | |
| s3 | Second Lens | Spherical | -2.9875 | 0.50 | Glass | 1.517 | 64.2 | -4.900 |
| s4 | | Spherical | 15.7760 | 0.36 | | | | |
| s5 | Third Lens | Spherical | -13.1470 | 1.77 | Glass | 2.001 | 29.1 | 7.574 |
| s6 | | Spherical | -5.0239 | 0.12 | | | | |
| s7 | Fourth Lens | Spherical | 9.2263 | 2.58 | Glass | 2.001 | 29.1 | 5.109 |
| s8 | | Spherical | -9.2263 | 1.05 | | | | |
| s9 | Fifth Lens | Spherical | -6.3138 | 0.65 | Glass | 1.923 | 20.9 | -7.300 |
| s10 | | Spherical | -300.0000 | 1.60 | | | | |
| s11 | Protective Glass | Spherical | Infinite | 0.40 | Glass | 1.523 | 54.5 | |
| s12 | | Spherical | Infinite | 0.33 | | | | |

As can be seen from Table 3 above, the focal length $f_1$ of the first lens 110 and the focal length f of the optical lens group in the embodiment of the present application satisfy a condition: $f_1/f = 1.54$.

The thickness $CT_2$ of the second lens 120 at the optical axis satisfies:

$$CT_2 = 0.50.$$

A reciprocal cuy s5 of the curvature radius of the object side surface of the third lens 130, an optical effective diameter map s5 of the object side surface of the third lens 130, an reciprocal cuy s6 of the curvature radius of the image side surface of the third lens 130, and an optical effective diameter of the image side surface of the third lens 130 satisfy: $|(cuy\ s5)*(map\ s5)-(cuy\ s6)*(map\ s6)|/2 = 0.17$ .

The curvature radius R s10 of the image side surface of the fifth lens 150 satisfies: Rs10 = -85.40.

When the wavelength is 960 nm, the refractive index $n_{\lambda 2}$ of the second lens 120 and the refractive index $n_{\lambda 3}$ of the third lens 130 satisfy a condition:

$$\left|n_{\lambda 3}-n_{\lambda 2}\right| * 100 = 46.00.$$

The Abbe number $vd_2$ of the second lens 120 with respect to the d light and the Abbe number $vd_5$ of the fifth lens 150 with respect to the d light satisfy a condition:

$$\left|vd_2-vd_5\right| = 39.50.$$

A distance $d_{34}$ between the third lens 130 and the fourth lens 140 on the optical axis and a distance $Ed_{34}$ between a periphery of the maximum effective diameter of the third lens 130 and a periphery of the maximum effective diameter of the fourth lens 140 satisfy a condition: $Ed_{34}/d_{34} = 11.67$.

The half ImgH of the diagonal length of the effective pixel area on the image side and the total track length TTL of the optical lens group satisfy a condition:

$$ImgH * 2/TTL = 0.54.$$

The focal length f of the optical lens group and the optical back focal length BFL of the optical lens group satisfy a condition: BFL/f = 0.46.

The half ImgH of the diagonal length of the effective pixel area on the image side and the angle of field of view FOV in the diagonal direction of the optical lens group satisfy a condition: Tan (FOV/2)/ImgH = 0.26.

The focal length f of the optical lens group and the entrance pupil diameter EPD of the optical lens group satisfy a condition: f/EPD = 2.4.

The distortion Dist of the optical lens group satisfies: |Dist| = 13.0%.

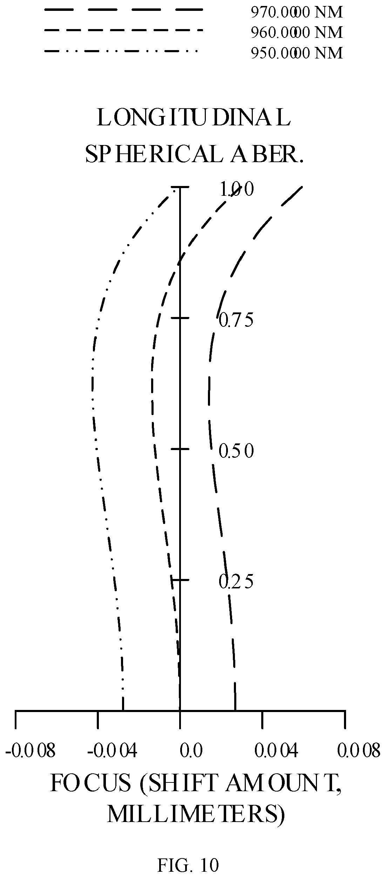

FIG. 10 is a graph showing the spherical aberration of the light at wavelengths of 950.0000 nm, 960.0000 nm and 970.0000 nm according to the embodiment of the present application. It can be seen from FIG. 10 that the spherical aberrations corresponding to the wavelengths of 950.0000 nm, 960.0000 nm and 970.0000 nm are all within 0.008 mm, indicating that the imaging quality according to the embodiment of the present application is excellent.

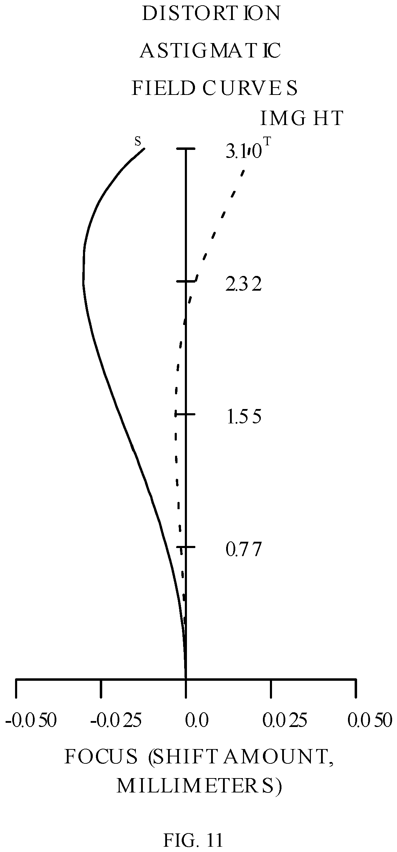

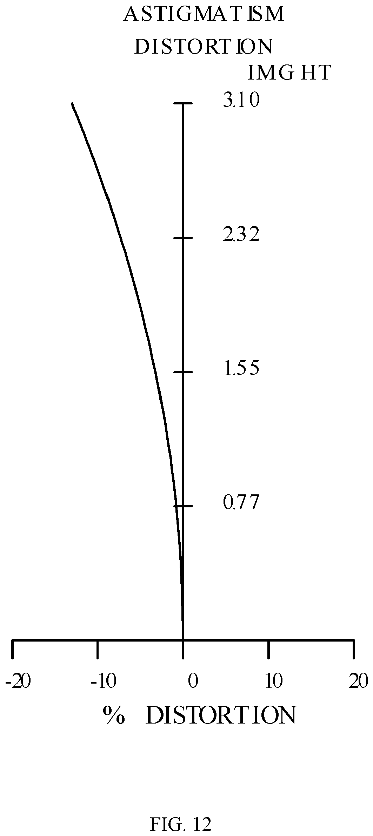

FIG. 11 is a field curve graph according to the embodiment of the present application, and it can be seen from FIG. 11 that the field curvature is within 0.050 mm, and better compensation is obtained. FIG. 12 is a distortion graph according to the embodiment of the present application, and it can be seen from FIG. 12 that the distortion is also well corrected.

In a second aspect, an embodiment of the present application provides a camera module including any of the above-mentioned optical lens groups and an image sensor. The optical lens group is used to receive a light signal of a subject and project the light signal to the image sensor. The image sensor is used to convert the light signal into an image signal.

In a third aspect, an embodiment of the present application provides a terminal including the above-mentioned camera module. The terminal can be any device with the function of acquiring images. For example, the terminal may be a smart phone, wearable device, computer device, television, vehicle, camera, monitoring device, etc. The camera module cooperates with the terminal to realize image acquisition and reproduction of the target object.

In the description of the present application, it should be understood that the terms "first", "second" and the like are used for descriptive purposes only, and are not intended be construed as indicating or implying relative importance. For those of ordinary skill in the art, the specific meanings of the above terms in the present application can be understood in specific situations. In addition, in the description of the present application, unless otherwise specified, "a plurality" means two or more. "And/or", which describes the association relationship of the associated objects, means that there can be three kinds of relationships, for example, A and/or B, which can mean that A exists alone, A and B exist at the same time, or B exists alone. The character "/" generally indicates that the associated objects before or after the character are in an "or" relationship.

The above disclosures are only the preferred embodiments of the present application, and certainly, cannot used to limit the scope of the present application. Therefore, equivalent changes made according to the claims of the present application are still within the scope of the present application.

## Claims

1. An optical lens group, **characterized by**, comprising, successively in order from an object side to an image side along an optical axis: a first lens, a second lens, a third lens, a fourth lens, and a fifth lens; wherein

   the first lens has a positive refractive power, a curvature radius of an object side surface of the first lens is positive, and a curvature radius of an image side surface of the first lens is negative;
   the second lens has a negative refractive power;
   the fifth lens has a negative refractive power, and a curvature radius of an object side surface of the fifth lens is negative.

2. The optical lens group according to claim 1, wherein half of a diagonal length of an effective pixel area on the image side is ImgH, and a total track length of the optical lens group is TTL ; ImgH and TTL satisfy the following condition:

$$0.1 < \mathrm{ImgH} * 2/\mathrm{TTL} < 0.8.$$

3. The optical lens group according to claim 1, wherein a focal length of the optical lens group is f, an optical back focal length of the optical lens group is BFL; f and BFL satisfy the following condition:

$$0 < \mathrm{BFL}/\mathrm{f} < 3.$$

4. The optical lens group according to claim 1, wherein a focal length of the first lens is $f_1$, a focal length of the optical lens group is f; $f_1$ and f satisfy the following condition:

$$1 < f_1/f < 3.$$

5. The optical lens group according to claim 1, wherein a curvature radius of an image side surface of the third lens is negative, a curvature radius of an object side surface of the fourth lens is positive; a distance between the image side surface of the third lens and the object side surface of the fourth lens on the optical axis is $d_{34}$ ; a distance from a projection point of a largest periphery of an optical effective area of the image side surface of the third lens on the optical axis to a projection point of a largest periphery of an optical effective area of the object side surface of the fourth lens is $Bd_{34}$; $d_{34}$ and $Ed_{34}$ satisfy the following condition:

$$Ed_{34}/d_{34} < 20.$$

6. The optical lens group according to claim 1, wherein half of a diagonal length of an effective pixel area on the image side is ImgH, and an angle of field of view in a diagonal direction of the optical lens group is FOV; ImgH and FOV satisfy the following condition:

$$\mathrm{Tan}(\mathrm{FOV}/2)/\mathrm{ImgH} > 0.15.$$

7. The optical lens group according to claim 1, wherein a thickness of the second lens at the optical axis is $CT_2$, $CT_2$ satisfies the following condition:

$$CT_2 > 0.3$$

8.  The optical lens group according to claim 1, wherein when a wavelength is 960 nm, a refractive index of the second lens is $n_{\lambda 2}$, a refractive index of the third lens is $n_{\lambda 3}$; $n_{\lambda 2}$ and $n_{\lambda 3}$ satisfy the following condition:

$$0 < \left| n_{\lambda 3} - n_{\lambda 2} \right| * 100 < 60$$

9.  The optical lens group according to claim 1, wherein an Abbe number of the second lens with respect to d light is $vd_2$, an Abbe number of the fifth lens with respect to the d light is $vd_5$; $vd_2$ and $vd_5$ satisfy the following condition:

$$\left| vd_2 - vd_5 \right| < 50$$

10. The optical lens group according to claim 1, wherein a focal length of the optical lens group is f , and an entrance pupil diameter of the optical lens group is EPD; f and EPD satisfy the following condition:

$$f/EPD \le 2.4$$

11. The optical lens group according to claim 1, wherein a distortion of the optical lens group is Dist; Dist satisfies the following condition:

$$\left| Dist \right| < 25\%$$

12. The optical lens group according to claim 1, wherein a reciprocal of a curvature radius of an object side surface of the third lens is cuy s5 , an optical effective diameter of the object side surface of the third lens is map s5, a reciprocal of a curvature radius of an image side surface of the third lens is cuy s6 , and an optical effective diameter of the image side surface of the third lens is map s6; cuy s5, map s5, cuy s6 , and map s6 satisfy the following condition:

$$\left| (cuy\ s5) * (map\ s5) - (cuy\ s6) * (map\ s6) \right| / 2 > 0.05$$

13. The optical lens group according to claim 1, wherein a curvature radius of an image side surface of the fifth lens is R s10; R s10 satisfies the following condition:

$$R\ s10 < -20$$

14. A camera module, **characterized by**, comprising:

    the optical lens group according to any one of claims 1 to 13; and
    an image sensor;
    wherein the optical lens group is configured to receive a light signal of a subject and project the light signal to the image sensor; and
    the image sensor is configured to convert the light signal into an image signal.

15. A terminal, **characterized by**, comprising the camera module according to claim 14.

110    120    130         140         150              160

s1   s2  s3   s4   s5    s6    s7         s8      s9  s10  s11  s12

FIG.1

— — — — —  970.0000 NM
— — — — — — — —  960.0000 NM
—··—···—···—··—···  950.0000 NM

**LONGITUDINAL**

**SPHERICAL ABER.**

**FOCUS (SHIFT AMOUNT, MILLIMETERS)**

FIG. 2

**DISTORTION**

**ASTIGMATIC**

**FIELD CURVES**

FIG. 3

ASTIGMATISM

DISTORTION

IMG HT

3.10

2.32

1.55

0.77

-20    -10    0    10    20

%    DISTORTION

FIG. 4

FIG. 5

— — — — — — ·  970.0000 NM
— — — — — — — — ·  960.0000 NM
— ·· — ··· — ··· — ·· —  950.0000 NM

LONGITUDINAL

SPHERICAL ABER.

FOCUS (SHIFT AMOUNT, MILLIMETERS)

FIG. 6

DISTORTION
ASTIGMATIC
FIELD CURVES

FIG. 7

ASTIGMATISM
DISTORTION

IMG HT

FIG. 8

FIG. 9

FIG. 10

DISTORTION

ASTIGMATIC

FIELD CURVES

FIG. 11

ASTIGMATISM

DISTORTION

IMG HT

3.10

2.32

1.55

0.77

-20    -10    0    10    20

%  DISTORTION

FIG. 12

## INTERNATIONAL SEARCH REPORT

| International application No. |
| --- |
| **PCT/CN2019/130134** |

**A. CLASSIFICATION OF SUBJECT MATTER**

G02B 13/00(2006.01)i

According to International Patent Classification (IPC) or to both national classification and IPC

**B. FIELDS SEARCHED**

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNPAT, CNKI, WPI, EPODOC: 透镜, 镜片, 第一, 第二, 第五, 正, 负, first, second, fifth, L1, L2, L5, G1, G2, G5, positive, negative, lens

**C. DOCUMENTS CONSIDERED TO BE RELEVANT**

| Category* | Citation of document, with indication, where appropriate, of the relevant passages | Relevant to claim No. |
| --- | --- | --- |
| X | CN 209640581 U (ZHEJIANG SUNNY OPTICS CO., LTD.) 15 November 2019 (2019-11-15)<br>description, paragraphs [0106]-[0116], [0172], figures 7-8D | 1, 7-9, 11,13-15 |
| X | CN 105988198 A (LARGAN PRECISION CO., LTD.) 05 October 2016 (2016-10-05)<br>description, paragraphs [0204]-[0222], [0408], figures 5-6 | 1-3, 6, 7, 9, 13-15 |
| X | CN 209471295 U (ZHEJIANG SUNNY OPTICS CO., LTD.) 08 October 2019 (2019-10-08)<br>description, paragraphs [0069]-[0104] | 1-3, 14, 15 |
| X | CN 110398819 A (AAC TECHNOLOGIES (SINGAPORE) CO., LTD.) 01 November 2019 (2019-11-01)<br>description, paragraphs [0136]-[0152] | 1, 14, 15 |
| A | JP 2018097289 A (KONICA MINOLTA INC.) 21 June 2018 (2018-06-21)<br>entire document | 1-15 |
| A | US 2019146182 A1 (LARGAN PRECISION CO., LTD.) 16 May 2019 (2019-05-16)<br>entire document | 1-15 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 September 2020** | **25 September 2020** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2019/130134**

| Patent document cited in search report | | | Publication date (day/month/year) | Patent family member(s) | | | Publication date (day/month/year) |
|---|---|---|---|---|---|---|---|
| CN | 209640581 | U | 15 November 2019 | None | | | |
| CN | 105988198 | A | 05 October 2016 | CN | 105988198 | B | 19 February 2019 |
| | | | | CN | 109683281 | A | 26 April 2019 |
| | | | | CN | 109856786 | A | 07 June 2019 |
| CN | 209471295 | U | 08 October 2019 | None | | | |
| CN | 110398819 | A | 01 November 2019 | None | | | |
| JP | 2018097289 | A | 21 June 2018 | None | | | |
| US | 2019146182 | A1 | 16 May 2019 | US | 10571652 | B2 | 25 February 2020 |
| | | | | TW | I522646 | B | 21 February 2016 |
| | | | | US | 10215956 | B2 | 26 February 2019 |
| | | | | US | 2018088300 | A1 | 29 March 2018 |
| | | | | US | 9864165 | B2 | 09 January 2018 |
| | | | | TW | 201638626 | A | 01 November 2016 |
| | | | | US | 2016320589 | A1 | 03 November 2016 |
| | | | | US | 2020209528 | A1 | 02 July 2020 |

Form PCT/ISA/210 (patent family annex) (January 2015)